# EUROPÄISCHE PATENTSCHRIFT

(11) **EP 1 591 672 B1**
(45) Veröffentlichungstag und Bekanntmachung des Hinweises auf die Patenterteilung: **07.11.2007**
(21) Anmeldenummer: 05009493.7
(22) Anmeldetag: 29.04.2005
(51) Int. Cl.: F16B 9/02

(54) **Klemmhalter für eine Tragstruktur**
Suspension clamping holder for a support structure
Clip de suspension pour une structure de support

(30) Priorität: 30.04.2004 DE 102004021513; 09.08.2004 US 600064 P
(43) Veröffentlichungstag der Anmeldung: 02.11.2005
(73) Patentinhaber: Airbus Deutschland GmbH, 21129 Hamburg (DE)
(72) Erfinder: Plate, Hans-Georg, 21514 Roseburg (DE); Schapke, Lutz, 22559 Hamburg (DE); Zyrull, Doris, 21629 Neu Wulmstorf (DE)
(74) Vertreter: Maiwald Patentanwalts GmbH

(56) Entgegenhaltungen:
- DE-A1- 19 743 976
- US-A1- 2003 070 377

## Beschreibung

Die Erfindung bezieht sich auf einen Klemmhalter für eine Tragstruktur gemäß dem Oberbegriff des Anspruchs 1. Dieser Klemmhalter, der für das Einhängen in eine Öffnung vorgesehen ist, die einem etwa senkrecht stehenden Strukturteil, beispielsweise dem Steg eines Doppel- T - Trägers einer Flugzeugstruktur ausgenommen ist, wird mit einem halterintegrierten Freiträger zur trägergelagerten Halterung von Rohren oder Kabel oder Kabelbündeln im Flugzeug benutzt, wobei eine Befestigung des Klemmhalters an der Flugzeugstruktur umgesetzt wird, die keinesfalls durch ein unbeabsichtigtes Lösen des Klemmhalters infolge von auf ihn einwirkende Rüttelungen, Vibrationen oder sonstige auf einerwartete mechanische Einflüsse, denen er während des Flug(betrieb)es ausgesetzt sein wird, beeinträchtigt wird. Die Befestigung des Klemmhalters wird in der Hauptsache an Flugzeugrumpf-Querträgern, Sitzschienen- oder Sitzschienen-Trägern erfolgen, um eine geeignete Halterung für flugzeugintern verlegte Leitungsverbindungen zu schaffen.

Allgemein sind der Fachwelt eine Vielzahl unterschiedlicher Klemmhalter bekannt, die beispielsweise im Fahrzeugbau und (so auch) im Flugzeugbau bei der Realisierung von Leitungsinstallationen über längere Leitungswege verwendet werden. Diese Klemmhalter werden aus Gründen der Gewichtsbeeinflussung eines Flugzeuges überwiegend aus einem Kunststoff bestehen. Derartige Kunststoff-Halter unterliegen allerdings dem Nachteil, dass sich mit zunehmender Befestigungszeit infolge (der eingangs angegebenen) mechanischer Einwirkungen auf den Halter weitestgehend eine Halterverrutschung oder sogar eine gelockerte Halter-Struktur-Befestigung nicht verhindert lässt, da die Kunststoffe nach längerem Gebrauch gewisse Fließeffekte zeigen werden, die bei anhaltender(n) mechanischen Dauereinwirkung(en) bis zur gelösten Halter-Struktur-Befestigung führen kann.

Auch ist bekannt, dass im Flugzeug, beispielsweise einem vom Typ: "Airbus", bei der Leitungsinstallation auch Halter berücksichtigt werden, die an einer Trägerstruktur des Flugzeuges innerhalb einer kreisförmigen Öffnung (Bohrung), welche dem Plattensteg eines t - förmig gestalteten Trägers ausgespart ist, angeordnet (eingehangen) und am Steg befestigt werden. Aus statischen Gründen besteht ein Zwang, dass diese separat eingebrachten Bohrungen randseitlich umfänglich der Bohrung entsprechend flächenförmig aufgedickt respektive mechanisch verstärkt werden, wodurch sich eine (ungewünschte) Gewichtszunahme nicht verhindern lassen wird. Mit dieser sogenannten Aufdickung werden bei der Strukturbefestigung traditionell verwendeter Einhängeklemmhalter folglich ebenfalls entsprechende Probleme auftauchen, die mit einer verkanteten Befestigung des Halterkörpers an jenem plattenartigen Stegelement des t - förmigen Trägers der Flugzeugstruktur eine unsachgemäß ausgeführte Installation des Einhängeklemmhalters provozieren. Ein Materialausgleich des betroffenen Auflagebereiches zwischen jener nicht aufgedickten Auflagefläche des Stegelementes und der für die Strukturanlage vorgesehenen Körperauflagefläche des Einhängeklemmhalters scheint für eine sachgemäße Befestigung des Halters an der Struktur unausweichlich. Traditionell verwendete Einhängehalter besitzen jedenfalls nicht die Fähigkeit, Dickenunterschiede der beschriebenen Art auszugleichen.

Andererseits besteht ständig die Gefahr, dass bei einer unsachgemäß ausgeführten Befestigung des Einhängehalters am Stegelement der betrachtete Träger einer ständigen Lockerungsgefahr unterliegen wird. Die Gründe dafür wurden bereits erwähnt. Deshalb wird bei einer sich lockernden (lösenden) Befestigung des Einhängehalters ein Abkippen (ein vertikales Absenken) des Einhängehalters, der beispielsweise einer kreisförmigen Öffnung (einem Loch) der Flugzeugstruktur mit sehr großem Durchmesser eingehangen und randseitlich des Loches (im Bereich eines unteren Teils des Lochumfanges) an der (lochumfänglich noch aufgedickten) Flugzeugstruktur befestigt ist, vorhersehbar sein, das ursächlich auf eine gewichtsmäßige Belastung des halterintegrierten Freiträgers zurückgehen wird.

Weiterhin wird durch die Druckschrift: "DE 197 43 976 A1" eine Haltevorrichtung offenbart, die an der Wand anzubringen ist. Der Aufbau jener Haltevorrichtung berücksichtigt deshalb ein Profilstück, welches auf seiner der Wand zugekehrten Seite wenigstens einen horizontal vorstehenden Schenkel aufweist, der zum Einhängen in eine Wandaussparung oder in ein zugehöriges Zwischenstück dient. Problematisch dabei ist, die Verdrehsicherheit zu gewährleisten, wozu die Wand mit zusätzlichen Bohrungen versehen werden muss oder zusätzliche Auflageflächen erforderlich sind. Ebenso kann eine entsprechende Schraubverbindung verwendet werden, was jedoch wiederum die bereits geschilderten Nachteile mit sich bringt, da in der Regel eine zusätzliche Bohrung für die Schraube erforderlich ist.

Außerdem ist aus der Druckschrift: "GB 2 276 912 A" eine Lösung für einen Klemmträger bekannt, dessen Aufbau, wenn auch teilweise ähnlich, sich von demjenigen des später vorgestellten Klemmhalter unterscheiden wird. Dieser Klemmträger wird mit einem sogenannten Seitenflügel angegeben, der einem Stegelement, dem ein- und endseitig ein Flansch angeformt ist, mechanisch verbunden ist. Weiter ist diesem Flansch am (nicht angeformten) freien Flanschende ein nach unten (also abwärts) gerichtetes Lippenelement angeformt, das mit dem Flansch (der Gestalt nach) ein Hakenelement bildet.

Diese Lösung für einen Klemmhalter berücksichtigt, dass jenes gebildete Hakenelement längskantenseitig einem zusätzlichen (platten- oder streifenartigen) Trägerelement (rail member) aufgehakt wird. Auf dem Flansch jenes (stegangeformten) gebildeten ersten Hakenelementes (des Klemmträgers) ist der Randbereich eines (nicht dem Klemmträger integrierten) Stützflansches (erstes Gurtelementes) abgelegt, dem lotrecht ein plattenartiges Stützelement (zweites Stegelement) angeformt ist, wobei jenes Gurt- und Trägerelement einen T - förmigen Träger bilden. Außerdem ist das nicht angeformte Ende des plattenartigen Stützelementes (zweiten Stegelements) etwa rechtwinklig mit einem Stützstreifen abgewinkelt, der auf der Seite jenes und parallel dem ersten Hakenelement flanschaufliegenden Randbereiches gelegen ist. Auf diesem Stützstreifen wird das nicht aufgehakte Ende des zusätzlichen Trägerelementes abgestützt.

Die Anordnung mit jenem Klemmträger wird insofern komplettiert, dass seitwärts des erwähnten Stegelementes jenes betrachteten Klemmträgers, dem der genannte Seitenflügel mechanisch (lösbar) verbunden ist, eine vertikale Zahnreihe angeordnet ist, in welche die (bezahnte) Innenseite eines vertikal (entlang der Zahnreihe) veränderbaren Sperrelementes einseitig und (zahn)stufenweise lokal greift. Jenem Sperrelement ist vorderseitig ein nach aufwärts gerichtetes weiteres zweites Hakenelement angesetzt, wobei auf diesem Hakenelement (innerhalb der Hakenform) jener Stützstreifen [der dem Stützflansch angeformten Stützelement-Platte samt dem aufgestützten (nicht aufgehakten Ende) des zusätzlichen Trägerelement abgestellt ist. Mit Hilfe des zahnpositionierten Sperrelementes wird also das zusätzliche Trägerelement, das gegen das (mit dem Flansch und der Lippe gebildeten) Hakenelement randseitlich dem Stützflansch drücken wird, nebengelegen dem Stegelement des Klemmträgers mechanisch fixiert.

Dieser vorgestellte Klemmträger wird sehr aufwendig und kompliziert an einer Trägerstruktur fixiert, sofern man jenen T-förmigen Träger, der mit einem Stützflansch (erstes Gurtelement) und einem plattenartigen Stützelement (zweites Stegelement) gebildet wird, mit einer Trägerstruktur vergleichen wird. Es wird aber nicht bezweifelt, dass jenes erste Hakenelement dieses Klemmträgers, das endseitig jenem Stegelement angeformt ist, sich einer kreisförmigen Öffnung einhängen lässt, die einer Struktur ausgespart ist. Allerdings wird ein derweise eingehangener Klemmträger schlichtweg nicht befähigt sein, ohne besondere Vorkehrungen eine rutschfest und verdrehsichere Befestigung an einem der Öffnung naheliegende Randbereich umzusetzen.

Demzufolge liegt der Erfindung die Aufgabe zugrunde, einen gattungsgemäßen Klemmhalter, der für das Einhängen in eine Öffnung, die einer Tragstruktur ausgespart ist, vorgesehen ist, derart zu verbessern, dass mit ihm eine stabile und verdrehsichere Befestigung an einem Steg der Trägerstruktur eines Flugzeuges ohne besonderen Aufwand erfolgen wird.

Diese Aufgabe wird durch die im Anspruch 1 angegebenen Maßnahmen gelöst. In den weiteren Ansprüchen werden zweckmäßige Ausgestaltungen und Weiterbildungen dieser Maßnahmen angegeben.

Die Erfindung wird in einem Ausführungsbeispiel anhand der beigefügten Zeichnungen näher beschrieben. Es zeigen
- Fig. 1: eine 3 D - Ansicht des Klemmhalters für eine Tragstruktur,
- Fig. 2: eine Strichdarstellung jener dem Klemmhalter nach Fig. 1 integrierten Elemente (mit einer der Seitenansicht des Klemmhalters korrelierenden Element-Lage),
- Fig. 3: eine 3 D - Ansicht eines dem Klemmhalter integrierten Andrückelementes,
- Fig. 4: eine Seitenansicht des einer Öffnung der Tragstruktur eingehangenen und an der Tragstruktur befestigten Klemmhalters im Endzustand,
- Fig. 4A: das Detail Z nach der Fig. 4 mit Darstellung des der Öffnung eingehangenen Klemmhalters.

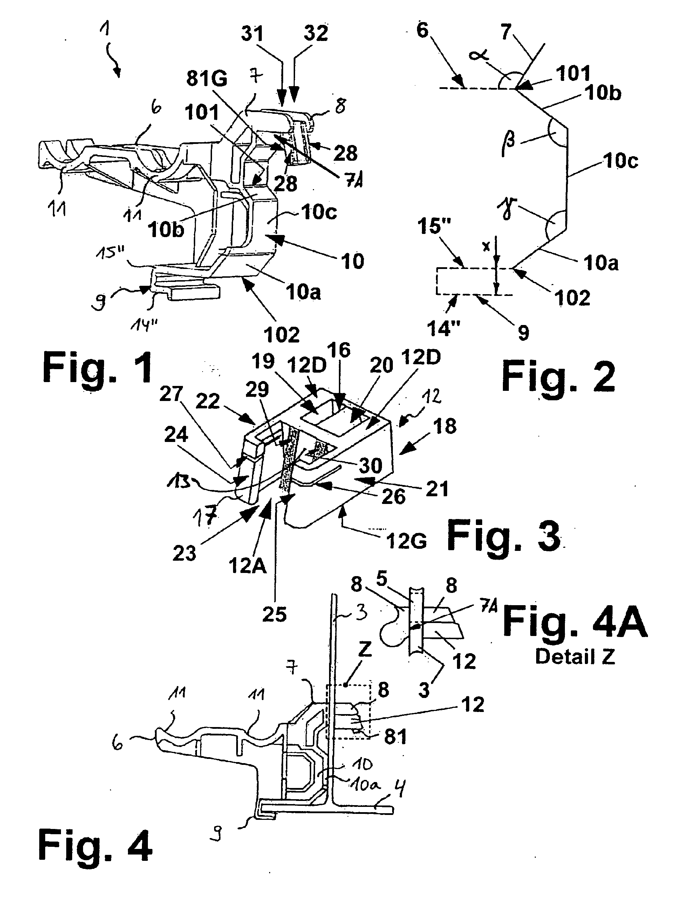

Der Klemmhalter 1 für eine Tragstruktur, der in der Fig. 1 in dimensionaler Darstellung gezeigt wird, wird als Einhängeklemmhalter verwendet, da er für das Einhängen in einer als Öffnung bezeichneten kreisförmigen Ausnehmung 5, die einem Stegelement 3 der Tragstruktur ausgespart ist, und seiner Befestigung an einem Randbereich des Stegelementes 3, der bis an einen Kreisabschnitt der Ausnehmung 5 (Öffnung) angrenzt, verwendet wird. Mit einem Blick auf die Figuren 4 und 4A kann man den befestigten Endzustand des Klemmhalters 1 entnehmen.

Die Tragstruktur, auf welche nachfolgend öfters Bezug genommen wird, bezieht sich auf einen t - förmigen Träger, der beispielsweise mit einem Doppel-T-Träger häufig der betrachteten Flugzeugstruktur integriert ist. Dabei wird ein Stegelement 3 betrachtet, das oberhalb einem unteren Gurtelement 4, auf der das Stegelement 3 lotrecht steht, angeordnet ist. Jenem plattenartigen Stegelement 3 ist eine kreisförmige Ausnehmung 5 ausgespart, wobei das Gurt- und das untere Trägerelement 3, 4 der mit einem T- oder Doppel -T-Träger 2 realisierten Trägerstruktur integriert sind.

Der Aufbau des Klemmhalters 1 (Einhängeklemmträgers) berücksichtigt einen sogenannten Freiträger 6, eine Stütze 10 und einen U-förmigen Klemmschieber 9, die in Profilbauweise unter Verwendung von Walzprofilen oder Blechen zu einem Halterkörper zusammengefasst sind. Mit einem Blick auf die Fig. 4c lässt sich entnehmen, dass der Freiträger 6 ein- und endseitig und lotrecht liegend einem geraden Stützenbereich 10c der Stütze 10 an einem oberen Ende 101 eines oberen Stützenrandbereiches 10b der Stütze 10, der im stumpfen Winkel β linksseitig dem geraden Stützenbereich 10c nach oberhalb abgewinkelt ist, angeformt ist. Jener Freiträger 6 ist der Stützenanformung mit einem Trägerfortsatz 7, der dem Freiträger 6 im stumpfem Winkel α nach oberhalb der Trägeranformung rechtsseitig gelegen abgewinkelt ist, fortgesetzt ist. Der Aufbau berücksichtigt weiterhin, dass ein unteres Ende 102 der Stütze 10 einem unteren Stützenrandbereich 10a zugeordnet ist, der im stumpfen Winkel y linksseitig dem geraden Stützenbereich 10c nach unterhalb abgewinkelt ist.

Außerdem wird ein Klemmschieber 9 betrachtet, der mit einem oberen und einem unteren Schenkelelement 14", 15", die parallel liegend im Abstand x angeordnet sind, ausgestattet ist. Das obere Schenkelelement 15" ist am freiem Schenkelende dem unteren Ende 102 der Stütze 10 angeformt. Dabei wird der Klemmschieber 9 befähigt, dass er mit dem geöffneten Querschnitt, den beide Schenkelelemente 14", 15" im Abstand x eingrenzen, dem unteren Gurtelement 4 aufschiebfähig ist, wobei im aufgeschobenen Endzustand der gerade Stützbereich 10c dem Stegelement 3 unterhalb der Ausnehmung 5 anliegend ist.

Alle diese genannten Tragkörper-Elemente wird der Betrachter in der Fig. 1 wiederfinden. Dem bleibt zu ergänzen, dass in der Fig. 1 hinzukommend halbschalenartige Öffnungen 11 angegeben werden, die oberhalb jenem Freiträger 6 ausgeformt sind. Diese Öffnungen 11 werden für die Ablage jener installierten Kabel, Leitungen oder Rohre genutzt, worauf aber wegen fehlender Bezugnahme auf das eingangsseitig angegeben und vordergründig zu lösenden Problem nicht näher eingegangen wird.

Zurückkommend auf die Fig. 1 wird fortgesetzt, dass dem freien Ende des Trägerfortsatzes 7 ein- und endseitig ein trägerartiges Halteelement 8 angeformt ist. Es ist beabsichtigt, dass die Lage des Halteelementes 8 etwa mit derjenigen des Freiträgers 6 übereinstimmend ist, sofern eine unterhalb dem Halteelement 8 gelegene und noch dem Trägerfortsatz 7 zugeordnete weitere Stützfläche 7A und der gerade Stützbereich 10c der Stütze 10 rückseitig dem Stegelement 3 unterhalb der kreisförmigen Ausnehmung 5 (der Öffnung) anliegt. Die weitere Stützfläche 10A ist am Klemmhalter 1 dermaßen angeordnet, dass deren ebener Flächenverlauf und Flächenlage mit dem- respektive derjenigen des geraden Stützbereiches 10c der Stütze 10 übereinstimmend ist. Weiterhin ist am freien Ende des Halteelementes 8 ein quaderförmiges Stützelement 81 angeformt, das endseitig der Quaderlängskanten mit einer Quaderquerfläche (respektive mit der kleineren Quaderseitenfläche) dem Halteelement 8 abgewinkelt ist. Dabei ist dieses Stützelement 81, sofern die weitere Stützfläche 10A der Stütze 10 und die erwähnte weitere Stützfläche 7A des Trägerfortsatzes 7 rückseitig dem Stegelement anliegt und das Halteelement 8 durch die kreisförmige Ausnehmung geführt ist, stützenvorderseitig (vorderseitig der Plattenfläche) des Stegelementes 3 gelegen abwärts der Stützelement-Anformung abgewinkelt.

Das Stützelement 81, das in der Fig. 2 dargestellt wird, steht mit einem quaderförmigen Andrückelement 12 in wechselseitiger Beziehung, weil es am Stützelement 81 lösbar befestigt angeordnet ist. Das Andrückelement 12 ist mit einem ersten und zweiten Aufnahmebereich 16, 17 realisiert. Der erste Aufnahmebereich 16 ist für die Aufnahme eines Kabelbinders und der zweite Aufnahmebereich 17 ist für die Aufnahme jenes Stützelementes 81 vorgesehen. Jener zweite Aufnahmebereich 17 ist mit einer Kammer 12A ausgestattet, deren Kammerraum zur Grund- und Deckfläche 12G, 12D des (quaderförmigen) Andrückelementes 12 geöffnet ist. Der Kammerraum verfügt über einen offenen Kammerquerschnitt, welcher dem Elementquerschnitt und der räumlichen Lage des Stützelementes 81 weitestgehend angepasst ist, weshalb ein kammerinterner Wandbereich 13 der Kammer 12A, sofern das Stützelement 81 durch die Kammer 12A geführt ist, durch das Korrelieren mehrerer mechanischer Mittel, die bei diesen beiden (zueinander bewegbaren) Verbindungselementen berücksichtigt sind, ortsfest am Stützelement 81 fixiert ist.

Die außenbefindliche Oberfläche einer rückseitigen Seitenfläche 18 des Andrückelementes 12 ist eben(flächig) gestaltet, weil diese Seitenfläche 18, sofern das Andrückelement 12 dem Stützelement 81 aufgeschoben ist, im aufgeschobenen Endzustand der vorderseitigen ebenflächigen Elementfläche des Stegelementes 3 anliegen kann. Von daher ist diese rückseitige Seitenfläche 18 des Andrückelementes 12 auf die lotrechte Anordnung eines Stegelementes (3) der Trägerstruktur abgestimmt. Dem ersten Aufnahmebereich 16 des Andrückelementes 12 sind zwei schlitzartige Ausnehmungen 19, 20 für die Aufnahme (jeweils eines streifenartigen Kabelbinderbandes) ausgenommen, die jeweils von der Deckfläche 12D zur Grundfläche 12G des Andrückelementes 12 und zu einer der rückseitigen Seitenfläche 18 im rechten Winkel gelegenen nebengelegenen Seitenflächen 21, 22 nach außen abgeschrägt sind.

Das Andrückelement 12 ist beispielgemäß mit einer vorderseitigen Seitenfläche realisiert. Dieser vorderseitigen Seitenfläche wird vorzugsweise ein rechteckigförmiger Seitenflächen-Teilbereich 23 ausgespart, beispielsweise ausgefräst, mit dem von der Grundfläche 12G bis zur Deckfläche 12D eine Öffnung der vorderseitigen Seitenfläche umgesetzt ist. Dadurch wird die Kammer 12A vorderseitig des Andrückelementes 12 geöffnet. Es verbleiben der vorderseitigen Seitenfläche vorderseitige Seitenflächen-Teilbereiche 24, 25, die nicht (mit) ausgespart sind und jeweils randseitlich der nebengelegenen Seitenflächen 21, 22 im rechten Winkel angrenzen. Letztere sind vorzugsweise von der Deckfläche zur Grundfläche des Andrückelementes 12 abwärts abgeschrägt ausgeführt, deren Lage etwa mit der Abwinkelung des Stützelementes 81 übereinstimmend ist.

Jenen nebengelegenen Seitenflächen 21, 22 und (beispielgemäß) der verbleibenden Seitenflächen-Teilbereichen 24, 25 ist (beginnend an der Vorderseite des Andrückelementes 12) jeweils ein Schlitz 26, 27 ausgespart, der parallel zur (und unterhalb der) Deckfläche (12D) oder (oberhalb) Grundfläche 12G des Andrückelementes 12 verlaufend angeordnet ist.

An beiden Quaderlängsflächen des quaderförmigen Stützelementes 81 sind mehrere noppenartige-oder zylinderartige Erhebungen 28 angeordnet sind, deren Querschnitt der Schlitzbreite des betreffenden Schlitzes 26, 27 angepasst ist. Diese Erhebungen sind etwa hälftig der Quaderhöhe oder randseitlich und parallel der Quaderlängskanten im Abstand zueinander positioniert. Der Abstand dieser Erhebungen 28 sollte dermaßen gewählt sein, dass ein Einrasten der einzelnen Erhebung 28 in den Schlitz 26, 27 gewährleistet ist.

Rückseitig der Kammer 12A des Andrückelementes 12 sind am kammerinternen Wandbereich 13 mehrere Leisten 29, 30 parallel verlaufend angeordnet sind, von denen beispielgemäß zwei Leisten 29, 30 berücksichtigt sind. Diese Leisten 29, 30 sind bis an die Grund- und die Deckfläche 12G, 12D des Andrückelementes 12 geführt und im Abstand zueinander angeordnet. Die Leistenoberfläche jener (am kammerinternen Wandbereich 13 befestigten) Leisten 29, 30, welche sich dem Kammerquerschnitt zuwendet, sollte (aus nachfolgend erkenntlichen Gründen) rau(h) beschaffen oder geriffelt ausgeführt werden.

Ebenfalls ist die Grundfläche 81 G des Stützelementes 81 mit mehreren parallel verlaufenden Flächenstreifen oder streifenartigen Flächenbereichen, die aufgerau(h)t oder geriffelt ausgebildet sein sollten, auszustatten, welche entlang oder parallel der Quaderlängskanten verlaufen und im Abstand zueinander angeordnet sind.

Es ist beabsichtigt, dass die rau(h)en oder geriffelten Leistenoberflächen des Andrückelementes 12 und die gleichermaßen ausgebildeten Flächenstreifen oder die streifenartigen Flächenbereiche des Stützelementes 81 miteinander mechanisch korrelieren, sofern das Stützelement 81 durch die Kammer 12A geführt oder das Andrückelement 12 dem Stützelement 81 aufgeschoben wird.

Das Andrückelement 12 ist dermaßen konzipiert, dass, währenddem das Stützelement 81 durch die Kammer 12A des Andrückelementes 12 geführt respektive letzteres dem Stützelement 81 aufgeschoben wird, die Flächenstreifen oder die streifenartigen Flächenbereiche an jene Leistenoberflächen der beiden Leisten 29, 30 (leicht) (an)drücken werden, so dass deren aufgerau(h)ten aneinander reiben oder die geriffelten Oberflächen einrasten werden. Somit lässt sich infolge der aneinander reibenden Element-Oberflächen wenigstens ein Verrutschen und / oder eine lösbare Befestigung des Andrückelementes 12 am Stützelement 81 umsetzen.

Hinzukommend sind einem nahe dem freien Ende des Halteelementes 8 gelegener Elementabschnitt zwei weitere schlitzartige Ausnehmungen 31, 32 ausgespart, die jenen erwähnten schlitzartigen Ausnehmungen 19, 20 des Andrückelementes 12 adäquat ausgenommen sind. Diese schlitzartigen Ausnehmungen 31, 32 werden dermaßen ausgespart, dass sich ein Kabelbinder(band) problemlos durch jene schlitzartigen Ausnehmungen 19, 20 des Andrückelementes 12 und / oder jene schlitzartige Ausnehmungen 31, 32 des Halteelementes 8, von denen jeweils zwei schlitzartige Ausnehmungen 19, 31 und 20, 32 paarweise übereinander angeordnet sind, führen lässt. Damit wird mit einem (sinnvollerweise den paarweise angeordneten Ausnehmungen 19, 31 und 20, 32) geschleiften Kabelbinderband, das endseitig einem Kabelbinderschloss gesteckt wird, oberhalb dem Trägerfortsatz 7 oder dem Halteelement 8 eine Kabelbinder-Befestigung des Andrückelementes 12 machbar.

Zusammenfassend beziehen sich die vorangestellten Ausführungen auf einen Klemmhalter 1 für das Einhängen in eine kreisförmige Ausnehmung 5 (eine Öffnung) einer Trägerstruktur, welcher mit einen U-förmig gestalteten Klemmschieber 9 ausgestattet ist, dessen Schenkelelemente 14", 15" rückseitig jener mit einem T-förmigen Profil ausgebildeten Trägerstruktur zur Umklammerung eines unteren Gurtelementes 4 vorgesehen sind. Ein oberes Schenkelelement 15" ist endseitig und abwärts (unterhalb) einer Stütze 10, die dem Klemmhalter-Körper-Profil integriert ist, (etwa) im rechten Winkel angeformt oder arretiert, wobei am verbleibenden anderen Ende der Stütze 10 ein Trägerfortsatz 7 angeformt ist, der sich zur Vorderseite des Klemmhalters 1 neigend abgewinkelt ist. Diesem Trägerfortsatz 7 ist ein Halteelement 8 fortgesetzt, das parallel dem oberen Schenkelelement 15" liegt. Mit einem Stützelement 81 wird der Klemmhalter 1 weiter vervollständigt, das im stumpfen Winkel abwärts (nach unterhalb) zum Klemmschieber 9 geneigt abgewinkelt ist. Mit diesem Klemmhalter-Aufbau besteht die Möglichkeit, die ebenflächig gestaltete Vorderseite der Stütze 10 an die Rückseite eines ebenflächigen Stegelementes 3 bis zur Körperflächenauflage zu führen, wobei gleichfalls das Halteelement 8 samt dem Stützelement 81 durch die Ausnehmung 5 der Trägerstruktur, die aus Gründen der Strukturverstärkung in diesem Bereich randseitig der (beispielsweise kreisförmig ausgebildeten) Öffnung von einem strukturverstärkenden Auftrag umgeben oder einfach gebördelt ausgeführt ist, geführt und der Klemmschieber 9 dem unteren Gurtelement 4 aufgeschoben wird. Diese Aufdickung mit dem strukturverstärkenden Auftrag oder die Bördelung wird mit einer unterhalb dem Halteelement 8 gelegenen und noch dem Trägerfortsatz 7 zugeordneten weiteren Stützfläche 7A ausgeglichen, die unterhalb dem Trägerfortsatz 7 angeordnet und rückseitig dem Stegelement 3 im Bereich jener Aufdickung anliegt, wobei die Lage und der Verlauf der Auflagefläche dieser Stützfläche 7A korrelierend der ebenflächigen Auflage der Stütze 10 am Stegelement 3 auf jene Aufdickung abgestimmt ist. Mit dieser Maßnahme ist zunächst ein lockeres Einhängen des Klemmhalters 1 an der Trägerstruktur umgesetzt, der wegen der Fähigkeit seines Einhängens auch gerne als "Einhängeklemmhalter" bezeichnet wird. Befestigt wird der Klemmhalter 1 durch das (zumindestens teilweise) Aufschieben eines sogenannten Andrückelementes 12 auf jenes Stützelement 81 in Richtung dessen Anformung an das Halteelement 8. Außerdem besteht die Möglichkeit, dass der Klemmschieber 9 (genauer: das obere Schenkelelement 15") lösbar am unteren Ende der Stütze 10 befestigt ist, damit dem Klemmhalter-Körper ausgewechselt werden kann. Sofern nun die beiden Schenkelelemente 14", 15" unterschiedlich stark ausgeführt sind, besteht die Möglichkeit, einen Höhenausgleich des auf dem Gurtelement 4 positionierten Klemmhalters 1, der auf die Einführung des Stützelementes 8 durch die kreisförmige Ausnehmung 5 respektive auf die Befestigung des Klemmhalters 1 am Stegelement 3 abgestimmt sein wird, einerseits als auch eine Anpassung an die Dicke des Gurtelementes 4 andererseits vornehmen zu können. Dabei wird eine Verwendung von dickeren und / oder längeren Schenkelelementen 14", 15" vorgesehen, die auf ein einzelnes Schenkelelement 14", 15" bezogen unterschiedlich berücksichtigt werden kann.

Ausführungsgemäß wird jener Klemmhalter 1 (Einhängeklemmhalter) mit dem Halteelement 8, welches etwa 15° schräg gestellt ist, in die kreisförmige Ausnehmung 5 (Öffnung) eines beispielsweise Doppel T-Trägers eingehängt. Hiernach wird dieser Einhängeklemmhalter mit dem angeformten Klemmschieber 9 über das waagerechte Teil des Doppel T-Trägers geschoben, so dass der gerade Stützbereich 10a des Einhängklemmhalters mit seiner vorderseitigen Auflagefläche an jener senkrechten Fläche eines Stegelementes des Doppel T-Trägers anliegt. Um ein Abkippen des Einhängklemmhalters durch eine Gewichtsbelastung jenes Freiträger 6 zu verhindern, wird das Andrückelement 12 auf das um 15° schräg gestellte Stützelement 81 des Einhängklemmhalters geschoben. Damit besteht auch die Möglichkeit, dass durch die Bewegung (das Aufschieben) des Andrückelementes 12 auf dem Stützelement 81, also von der untersten Stellung des Andrückelementes 12 am (15° schrägen) Stützelement 81 bis zur oberen Stellung des Andrückelementes 12 am Stützelement 81 ein Dickenunterschied des Stegelementes 3 (also des senkrechten Teiles) des Doppel T-Trägers ausgeglichen werden kann. Um zu verhindern, das dass Andrückelement 12 vom Stützelement 81 abfällt oder durch Vibration sich löst, sind seitlich am Stützeelement 81, das dem Halteelement 8 fortgesetzt ist, entsprechende Rastflächen, beispielsweise noppenartige Erhebungen 28 (Rastnoppen) angebracht, welche in die Schlitze 26, 27 (Rastschlitze) des Andrückelements 12 einrasten. Dabei wird das Andrückelement 12 jenes Stützelement 81 umklammern. Als zusätzliche Sicherheit sind am Andrückelement 12 dem zweiten Aufnahmebereich 17 innerhalb jener Kammer 12A noch zwei mit rau(h)en Oberflächen ausgeführte Leisten 29, 30 angebracht, welche jeweils auf einer korrelierenden rau(h)en Fläche 81G des Stützelementes 81 anliegen. Ebenfalls aus Sicherheitsgründen und um eine feste Anlage des Andrückelementes 12 am Stegelement 3 des Doppel-T-Trägers zu gewährleisten, wird zuletzt noch das Kabelbinderband jenes angegebenen Kabelbinders durch zwei Schlitze 19, 20, die dem ersten Aufnahmebereich 16 (im angeformten Teil) des Andrückelementes12 ausgenommen sind und durch weitere ausgesparte Schlitze 31, 32, die dem Befestigungselement 8 ausgenommen sind, geführt und danach an der Trägerstruktur befestigt. Somit liegt der Stegbereich 3 (der senkrechte Teil) des Doppel T-Trägers festgekeilt zwischen dem Einhängeklemmhalterund dem Andrückelement 12.

### Bezugszeichen

- 1 2: Klemmhalter
- 3: Stegelement
- 4: unteres Gurtelement
- 5: Ausnehmung, kreisförmig
- 6: Freiträger
- 7: Trägerfortsatz
- 7A: weitere Stützfläche (des Trägerfortsatzes 7)
- 8: Halteelement, trägerartig
- 81: Stützelement
- 81G: Grundfläche (des Stützelements 81)
- 9: Klemmschieber, U-förmig
- 10: Stütze
- 10a: unterer Stützenrandbereich (der Stütze 10)
- 10b: oberer Stützenrandbereich (der Stütze 10)
- 10c: gerader Stützbereich (der Stütze 10)
- 101: oberes Ende (der Stütze 10)
- 102 11: unteres Ende (der Stütze 10)
- 12: Andrückelement, quaderförmig
- 12A: Kammer (des Andrückelementes 12)
- 12G: Grundfläche (des Andrückelementes 12)
- 12D: Deckfläche (des Andrückelementes 12)
- 13 14: Wandbereich, kammerintern
- 14" 15: unteres Schenkelelement (des Klemmschiebers 9)
- 15": oberes Schenkelelement (des Klemmschiebers 9)
- 16: erster Aufnahmebereich
- 17: zweiter Aufnahmebereich
- 18: rückseitige Seitenfläche (des Andrückelementes 12)
- 19: schlitzartige Ausnehmungen (des Andrückelementes 12)
- 20: schlitzartige Ausnehmungen (des Andrückelementes 12)
- 21: nebengelegene Seitenflächen (des Andrückelementes 12)
- 22: nebengelegene Seitenflächen (des Andrückelementes 12)
- 23: rechteckiger Teilflächenbereich, ausgespart
- 24: verbleibender vorderseitiger Teilflächenbereich (des Andrückelementes 12)
- 25: verbleibender vorderseitiger Teilflächenbereich (des Andrückelementes 12)
- 26: Schlitz
- 27: Schlitz
- 28: Erhebungen (des Stützelementes 81), noppenartig oder zylinderartig
- 29: Leisten (des Andrückelementes 12)
- 30: Leisten (des Andrückelementes 12)
- 31: Schlitz (für einen Kabelbinder)
- 32: Schlitz (für einen Kabelbinder)

## Patentansprüche

1. Klemmhalter für eine Trägerstruktur, der aus einem Freiträger (6), einer Stütze (10) und einem Klemmschieber (9), die in Profilbauweise unter Verwendung von Walzprofilen und / oder Blechen zu einem Halterkörper zusammengefasst sind, aufgebaut ist, bei dem der Freiträger (6) trägerendseitig an einem oberen Ende (101) der Stütze (10) lotrecht angeformt ist, welcher nachfolgend der Träger-Anformung jenes stützenrückseitig gelegenen Freiträgers (6) der Stütze (10) mit einem Trägerfortsatz (7) fortgesetzt ist, der stützenvorderseitig gelegen dem Freiträger (6) aufwärts der Trägeranformung abgewinkelt ist, wobei einem unteren Ende (102) der Stütze (10) ein oberes Schenkelelement (15") des Klemmschiebers (9), der mit zwei parallel angeordneten Schenkelelementen (14", 15") und einer letzteren schenkelendseitig befestigten Rückwand U-förmig gestaltet ist, mit einem freien Schenkelende lotrecht der Stütze (10) angeformt ist, und bei dem einem freien Ende des Trägerfortsatzes (7) ein trägerartiges Halteelement (8) angeformt ist, dessen Lage etwa mit derjenigen des Freiträgers (6) übereinstimmend ist, und am freien Ende des Halteelementes (8) ein quaderförmiges Stützelement (81) angeformt ist, das endseitig der Quaderlängskanten mit einer Quaderquerfläche dem Halteelement (8) stützenvorderseitig gelegen abwärts der Stützelement-Anformung abgewinkelt ist,
**dadurch gekennzeichnet, dass** das Stützelement (81) mit einem quaderförmigen Andrückelement (12) in wechselseitiger Beziehung steht, wenn letzteres am Stützelement (81) lösbar befestigt angeordnet ist, bei dem das Andrückelement (12) mit einem ersten Aufnahmebereich (16) für einen Kabelbinder und mit einem zweiten Aufnahmebereich (17) für das Stützelement (81) realisiert ist, bei dem der zweite Aufnahmebereich (17) mit einer Kammer (12A), deren Kammerraum zur Grund- und Deckfläche (12G, 12D) des Andrückelementes (12) geöffnet ist, ausgestattet ist, deren offener Kammerquerschnitt dem Elementquerschnitt und der räumlichen Lage des Stützelementes (81) weitestgehend angepasst ist, weshalb ein kammerinterner Wandbereich (13) der Kammer (12A), sofern das Stützelement (81) durch die Kammer (12A) geführt ist, durch das Korrelieren mehrerer mechanischer Mittel, die bei diesen beiden Verbindungselementen berücksichtigt sind, ortsfest am Stützelement (81) fixiert ist.

2. Klemmhalter nach Anspruch 1, **dadurch gekennzeichnet, dass** die außenbefindliche Oberfläche einer rückseitigen Seitenfläche (18) des Andrückelementes (12) eben gestaltet ist, die auf die lotrechte Anordnung eines Stegelementes (3) der Trägerstruktur abgestimmt ist, und dem ersten Aufnahmebereich (16) des Andrückelementes (12) zwei schlitzartige Ausnehmungen (19, 20), die jeweils von der Deckfläche (12D) zur Grundfläche (12G) des Andrückelementes (12) und zu einer der rückseitigen Seitenfläche (18) im rechten Winkel gelegenen nebengelegenen Seitenflächen (21, 22) nach außen abgeschrägt sind, ausgenommen sind.

3. Klemmhalter nach den Ansprüchen 1 und 2, **dadurch gekennzeichnet, dass** das Andrückelement (12) ohne oder mit einer vorderseitigen Seitenfläche realisiert ist, wobei einer berücksichtigten vorderseitigen Seitenfläche vorzugsweise ein rechteckiger Seitenflächen-Teilbereich (23) ausgespart ist, mit dem von der Grundfläche (12G) bis zur Deckfläche (12D) eine Öffnung der vorderseitigen Seitenfläche umgesetzt ist, so dass die Kammer (12A) vorderseitig des Andrückelementes (12) geöffnet ist, und die freien Seitenkanten der nebengelegenen Seitenflächen (21, 22) oder jene verbleibenden vorderseitigen Seitenflächen-Teilbereiche (24, 25) der vorderseitigen Seitenfläche, die nicht ausgespart sind und jeweils randseitlich der nebengelegenen Seitenflächen (21, 22) im rechten Winkel angrenzen, vorzugsweise von der Deckfläche zur Grundfläche des Andrückelementes (12) abwärts abgeschrägt sind, deren Lage etwa mit der Abwinkelung des Stützelementes (81) übereinstimmend ist.

4. Klemmhalter nach den Ansprüchen 2 und 3, **dadurch gekennzeichnet, dass** den nebengelegenen Seitenflächen (21, 22) und / oder den verbleibenden Seitenflächen-Teilbereichen (24, 25) jeweils ein Schlitz (26, 27) ausgespart ist, der parallel zur Deckfläche (12D) oder Grundfläche (12G) des Andrückelementes (12) verlaufend angeordnet ist.

5. Klemmhalter nach Anspruch 1, **dadurch gekennzeichnet, dass** an beiden Quaderlängsflächen des quaderförmigen Stützelementes (81) mehrere noppenartige- oder zylinderartige Erhebungen (28) angeordnet sind, deren Querschnitt der Schlitzbreite des betreffenden Schlitzes (26, 27) angepasst ist, die etwa hälftig der Quaderhöhe oder randseitlich und parallel der Quaderlängskanten im Abstand zueinander positioniert sind, wobei der Abstand dieser Erhebungen (28) dermaßen gewählt ist, dass ein Einrasten der einzelnen Erhebung (28) in den Schlitz (26, 27) gewährleistet ist.

6. Klemmhalter nach Anspruch 1, **dadurch gekennzeichnet, dass** rückseitig der Kammer (12A) am kammerinternen Wandbereich (13) mehrere Leisten (29, 30) parallel verlaufend angeordnet sind, die bis an die Grund- und die Deckfläche (12G, 12D) des Andrückelementes (12) geführt und im Abstand zueinander angeordnet sind, deren nicht befestigte und dem Kammerquerschnitt zugewandte Leistenoberfläche rau(h) beschaffen oder geriffelt ausgeführt ist.

7. Klemmhalter nach Anspruch 1, **dadurch gekennzeichnet, dass** die Grundfläche (81G) des Stützelementes (81) mit mehreren parallel verlaufenden aufgerau(h)ten oder geriffelt ausgebildeten Flächenstreifen oder streifenartigen Flächenbereichen ausgeführt ist, welche entlang oder parallel der Quaderlängskanten verlaufen und im Abstand zueinander angeordnet sind.

8. Klemmhalter nach den Ansprüchen 6 und 7, **dadurch gekennzeichnet, dass** die rau(h)en oder geriffelten Leistenoberflächen des Andrückelementes (12) und die gleichermaßen ausgebildeten Flächenstreifen oder die streifenartigen Flächenbereiche des Stützelementes (81), miteinander mechanisch korrelieren, sofern das Stützelement (81) durch die Kammer (12A) geführt oder das Andrückelement (12) dem Stützelement (81) aufgeschoben wird, dermaßen, dass die Flächenstreifen oder die streifenartigen Flächenbereiche auf den Leistenoberflächen angeordnet sind, mit denen sich infolge der aneinander reibenden Element-Oberflächen wenigstens ein Verrutschen und / oder eine lösbare Befestigung beider Elemente umsetzen lässt.

9. Klemmhalter nach den Ansprüchen 1 und 2, **dadurch gekennzeichnet, dass** einem nahe dem freien Ende des Halteelementes (8) gelegenen Elementabschnitt zwei weitere schlitzartige Ausnehmungen (31, 32) ausgespart sind, die jenen schlitzartigen Ausnehmungen (19, 20) des Andrückelementes (12) adäquat ausgenommen sind, dermaßen, das sich ein Kabelbinder durch jene schlitzartigen Ausnehmungen(19, 31) und / oder (20, 32), die paarweise übereinander angeordnet sind, führen lässt, mit dem eine Kabelbinder-Befestigung des Halteelementes (8) und des Andrückelementes (12) machbar ist.

## Claims

1. Suspension clamping holder for a support structure comprising a cantilever beam (6), a pillar (10) and a clamp slider (9) which are combined in profile construction using rolled profiles and/or sheets to form a holding body in which the cantilever beam (6) at the beam end side is moulded on perpendicularly at an upper end (101) of the pillar (10), in which following the beam moulding of this cantilever beam (6) at the rear of the pillar, the pillar is continued with a beam extension which is arranged at the pillar front face of the cantilever beam (6) and angled upward from the beam moulding, wherein an upper leg element (15") of the clamp slider (9), which has a U-shape with two leg elements (14", 15") arranged in parallel and a further rear wall fastened to the leg end-side, is moulded onto a lower end (102) of the pillar (10) with a free leg end perpendicular to the pillar (10) and in which moulded onto a free end of the beam moulding (7), there is a beam-like holding element (8) whose position approximately corresponds to that of the cantilever beam (6) and moulded onto the free end of the holding element (8) there is a cuboid support element (81) which at the end of the cuboid long faces with a cuboid transverse surface arranged at the pillar front face of the holding element (8) is angled downward from the support element extension,
**characterised in that** the support element (81) is in a mutual relation with a cuboid pressure element (12) when the latter is arranged detachably on the support element (81) in which the pressure element (12) is implemented with a first reception area (16) for a cable tie and with a second reception area (17) for the support element (81), in which the second reception area (17) is equipped with a chamber (12A) whose chamber space is open toward the base and cover faces (12G, 12D) of the pressure element (12), the open chamber cross section of which is adapted as greatly as possible to the element cross section and the spatial position of the support element (81) because of which, in so far the support element (81) is guided through the chamber (12A), an interior wall region 13 of the chamber (12A) is fixed in place on the support element (81) by the correlation of a plurality of mechanical means which are considered in these two connection elements.

2. Suspension clamping holder according to claim 1 **characterised in that** the external surface of a rear lateral face (18) of the pressure element (12) has a flat design which is matched to the perpendicular arrangement of web element (3) of the support structure and two slotted recesses (19, 20) are left out of the first reception area (16) of the pressure element (12) each of which are bevelled outward from the cover face (12D) to the base face (12G) of pressure element (12) and to one of the neighbouring lateral faces (21, 22) lying at right angles to the rear lateral face (18).

3. Suspension clamping holder according to claims 1 and 2 **characterised in that** the pressure element (12) is implemented without or with a front lateral face, wherein preferably a rectangular lateral face partial region (23) is left out of a considered front lateral face, with which an opening of the front lateral face is implemented from the base face (12G) to the cover face (12D) so that the chamber (12A) is open on the front side of the pressure element (12) and the free lateral edges of the neighbouring lateral faces (21, 22) or the remaining front side lateral face partial regions (24, 25) of the front lateral face, which are not left out and which each adjoin the edge of the neighbouring lateral faces (21, 22) at a right angle, are preferably bevelled downward from the cover face to the base face of the pressure element (12), whose position approximately corresponds to the angle of the support element (81).

4. Suspension clamping holder according to claims 2 and 3, **characterised in that** a slot (26, 27) running parallel to the cover face (12D) or base face (12G) of the pressure element is left out in the neighbouring lateral faces (21, 22) and/or the remaining lateral face partial regions (24, 25).

5. Suspension clamping holder according to claim 1 **characterised in that** arranged on both cuboid long faces of the cuboid support element (81) there is a plurality of nubby or cylindrical protrusions (28) whose cross section is matched to the slot width of the relevant slot (26, 27) which are positioned at a distance to one another of approximately half the cuboid height or around the edge and parallel to the cuboid long edges, wherein the distance between these protrusions (28) is selected in such a way that it is ensured that the individual protrusion (28) engages in the slot (26, 27).

6. Suspension clamping holder according to claim 1 **characterised in that** arranged on the rear of the chamber (12A) on the internal chamber wall region (13) there is a plurality of ridges (29, 30) running in parallel which are led to the base and cover faces (12G, 12D) of the pressure element (12) and are arranged at a distance to each other and whose ridge surface facing the chamber cross section is implemented as rough or rippling.

7. Suspension clamping holder according to claim 1 **characterised in that** the base face (81G) of the support element (81) is implemented with a plurality of parallel flat strips or strip-like flat regions parallel which are roughened or rippled and which are arranged along or parallel to the cuboid long edges and at a distance to one another.

8. Suspension clamping holder according to claims 6 and 7 **characterised in that** the rough or rippled strip surfaces of the pressure element (12) and the similarly embodied flat strips of the support element (81) correlate mechanically with one another in so far the support element (81) is guided through the chamber (12A) or the pressure element (12) is pushed onto the support element (81) in such a way that the flat strips or the strip-like flat regions are arranged on the strip surfaces so that their element surfaces rubbing on one another causes at least one slippage and/or a detachable attachment of the two elements to be implemented.

9. Suspension clamping holder according to claims 1 and 2 **characterised in that** two further slotted recesses (31, 32) are left out of an element section near the free end of the holding element (8) which are adequately left out of the slit recesses (19, 20) of the pressure element (12) in such a way that a cable tie may be guided through the slotted recess (19, 31) and/or (20, 32), which are arranged in pairs one above the other, with which a cable tie attachment of the holding element (8) and the pressure element (12) may be achieved.

## Revendications

1. Clip de suspension pour une structure de support, constitué d'un élément porteur libre (6), d'un support (10) et d'une glissière (9), qui sont assemblés pour former un corps de fixation construit en profilés en utilisant des profils laminés et/ou des tôles, sur lequel le porteur libre (6) est formé perpendiculairement du côté de l'élément porteur sur une extrémité supérieure (101) du support (10), lequel étant prolongé d'un prolongement (7) à la suite de la formation de l'élément porteur du porteur libre (6) situé sur le côté arrière du support (10), le prolongement étant situé sur le côté avant du support et incliné vers le haut par rapport au porteur libre (6) à partir de la formation du porteur, où une branche supérieure (15") de la glissière (9) est formée perpendiculairement au support (10), avec une extrémité de branche libre, à partir d'une extrémité inférieure (102) du support (10), laquelle glissière étant constituée de deux branches parallèles (14", 15") et d'une paroi d'extrémité en U fixée à l'extrémité des branches, et où un élément de retenue (8) de type porteur est formé sur l'extrémité libre du prolongement du porteur (7), la position de l'élément de retenue étant approximativement accordée à celle du porteur libre (6), et un élément de support parallélépipédique (81) est formé à l'extrémité libre de l'élément de retenue (8), cet élément de support présente à l'extrémité des arêtes longitudinales du parallélépipède une surface transversale, située en avant du support, inclinée vers le bas par rapport à l'élément de retenue (8) à partir de l'élément de support,
**caractérisé en ce que** l'élément de support (81) est en interaction bidirectionnelle avec un élément de pression (12) parallélépipédique, lorsque ce dernier est fixé à l'élément de support (81) de manière amovible, où l'élément de pression (12) est réalisé avec une première zone de réception (16) pour un attache-câbles et avec une deuxième zone de réception (17) pour l'élément de support (81), où la deuxième zone de réception (17) est équipée d'une chambre (12A) dont le volume est ouvert sur les surfaces inférieure et supérieure (12G, 12D) de l'élément de pression (12), où la section transversale ouverte de la chambre est autant que possible adaptée à la section transversale et à la position spatiale de l'élément de support (81), pour cette raison une paroi interne (13) de la chambre (12A) est fermement fixée à l'élément de support (81), par la corrélation de plusieurs moyens mécaniques, qui sont pris en compte pour ces deux éléments de raccordement, dans la mesure où l'élément de support (81) est introduit au travers de la chambre (12A).

2. Clip de suspension selon la revendication 1, **caractérisé en ce que** la surface supérieure externe d'une surface latérale arrière (18) de l'élément de pression (12) est plane, ladite surface étant ajustée à la disposition perpendiculaire d'un élément (3) de la structure de support, et sur laquelle deux évidements en forme de fente (19, 20) sont réalisés dans la première zone de réception (16) de l'élément de pression (12), ces évidements étant chanfreinés de la surface supérieure (12D) jusqu'à la surface inférieure (12G) de l'élément de pression (12) et jusqu'à une des surface latérales arrières (18) des surfaces latérales voisines situées à angle droit (21, 22).

3. Clip de suspension selon les revendications 1 et 2, **caractérisé en ce que** l'élément de pression (12) est réalisé avec ou sans une surface latérale avant, où une zone partielle rectangulaire (23) de la surface latérale est de préférence découpée dans la surface latérale avant en question, ce par quoi une ouverture est formée dans la surface latérale avant allant de la surface inférieure (12G) jusqu'à la surface supérieure (12D), de telle sorte que la chambre (12A) soit ouverte sur le côté avant de l'élément de pression (12), et les arêtes latérales libres des surfaces latérales voisines (21, 22), ou les arêtes des zones partielles (24, 25) restantes sur l'avant des surfaces latérales avant qui ne sont pas découpées et délimitent à angle droit les surfaces latérales voisines (21, 22), de préférence de la surface supérieure jusqu'à la surface inférieure de l'élément de pression (12), sont de préférence inclinées vers le bas de la surface supérieure jusqu'à la surface inférieure de l'élément de pression (12), dont la position est approximativement en accord avec l'inclinaison de l'élément de support (81).

4. Clip de suspension selon les revendications 2 et 3, **caractérisé en ce qu'**un fente (26, 27) est découpée dans chacune des surfaces latérales voisines (21, 22) et / ou dans chacune des zones partielles de surfaces latérales restantes (24, 25), fente qui s'étend en parallèle à la surface supérieure (12D) ou à la surface inférieure (12G) de l'élément de pression (12).

5. Clip de suspension selon la revendication 1, **caractérisé en ce que** plusieurs protubérances (28), en forme de boutons ou de cylindres, sont disposées sur les deux surfaces longitudinales du parallélépipède de l'élément de support en forme de parallélépipède (81), dont la section transversale est ajustée à la largeur de la fente considérée (26, 27), les protubérances étant disposées à mi hauteur du parallélépipède ou latéralement et en parallèle aux arêtes longitudinales du parallélépipède, séparées l'une de l'autre par un intervalle, où l'intervalle entre ces protubérances (28) est choisi de telle sorte qu'un encliquetage des protubérances individuelles (28) dans la fente (26,27) soit assuré.

6. Clip de suspension selon la revendication 1, **caractérisé en ce que** plusieurs barrettes (29, 30) parallèles sont disposées en arrière de la chambre (12A) sur la paroi interne (13) de la chambre, ces barrettes vont de la surface inférieure jusqu'à la surface supérieure (12G, 12D) de l'élément de pression (12) et elles sont séparées entre elles par un intervalle, leur surface libre et tournée vers la section transversale de la chambre possède une finition rugueuse ou striée.

7. Clip de suspension selon la revendication 1, **caractérisé en ce que** la surface du bas (81G) de l'élément de support (81) est réalisée avec plusieurs rayures, ou surfaces formant des bandes parallèles, rugueuses ou striées, lesquelles s'étendent le long ou en parallèle aux arêtes longitudinales du parallélépipède et sont séparées entre elles par un intervalle.

8. Clip de suspension selon les revendications 6 et 7, **caractérisé en ce que** les surfaces rugueuses ou striées des barrettes de l'élément de pression (12) sont mécaniquement corrélées aux rayures ou aux surfaces des bandes similaires de l'élément de support (81), dans la mesure où l'élément de support (81) est poussé au travers de la chambre (12A) ou que l'élément de pression (12) est glissé sur l'élément de support (81) de telle sorte que les rayures ou les surfaces des bandes se trouvent disposées sur les surfaces des barrettes, avec lesquelles il se forme au moins un glissement ou une fixation amovible des deux éléments suite au frottement des surfaces des éléments entre elles.

9. Clip de suspension selon les revendications 1 et 2, **caractérisé en ce que** deux fentes (31, 32) supplémentaires sont découpées dans une section d'élément située dans la proximité de l'extrémité libre de l'élément de retenue (8), correspondant adéquatement aux fentes (19, 20) de l'élément de pression (12) de telle sorte qu'il soit possible de passer un attache-câbles au travers des fentes (19, 31) et / ou (20, 32), disposées l'une sur l'autre par paires, avec lequel il est possible de réaliser une fixation d'attache-câbles à l'élément de retenue (8) et à l'élément de pression (12).
